**Europäisches Patentamt**

**European Patent Office**

**Office européen des brevets**

(19)

(11) Numéro de publication: **0 153 238**
**B1**

(12) # FASCICULE DE BREVET EUROPEEN

(45) Date de publication du fascicule du brevet:
**15.07.87**

(51) Int. Cl.⁴: **B 60 T 13/24**

(21) Numéro de dépôt: **85400239.1**

(22) Date de dépôt: **13.02.85**

(54) Servomoteur d'assistance au freinage.

(30) Priorité: **22.02.84 FR 8402655**

(43) Date de publication de la demande:
**28.08.85 Bulletin 85/35**

(45) Mention de la délivrance du brevet:
**15.07.87 Bulletin 87/29**

(84) Etats contractants désignés:
**DE GB IT**

(56) Documents cités:
**DE - A - 3 300 829**
**FR - A - 2 502 567**
**FR - A - 2 506 402**
**FR - A - 2 528 780**
**GB - A - 2 121 898**
**US - A - 3 688 647**

(73) Titulaire: **BENDIX France, 126, rue de Stalingrad,**
**F-93700 Drancy (FR)**

(72) Inventeur: **Thioux, Alain, 9, Allée des Bordes,**
**F-94430 Chennevières (FR)**
Inventeur: **Meynier, Guy, 58, rue de Reims,**
**F-93600 Aulney-sous-Bois (FR)**

(74) Mandataire: **Le Moenner, Gabriel et al, SERVICE**
**BREVETS BENDIX 44, Rue François 1er, F-75008 Paris**
**(FR)**

## Description

La présente invention concerne les servomoteurs d'assistance au freinage, notamment pour véhicules automobiles, et plus particulièrement les servomoteurs pneumatiques du type comprenant un boîtier, une structure de piston divisant intérieurement le boîtier en deux chambres, un moyen de valve de distribution disposé dans un corps de valve solidaire centralement de la structure de piston et actionné par un organe d'entrée pour créer sélectivement une différentielle de pression entre les chambres, le moyen de valve comportant un plongeur monté à coulissement dans le corps de valve, relié à l'organe d'entrée et définissant à une de ses extrémités un siège mobile de clapet, un siège fixe de clapet formé par le corps de valve, concentriquement au siège mobile de clapet, un moyen de clapet monté dans le corps de valve et sollicité élastiquement vers les sièges de clapet fixe et mobile, un ressort de rappel prenant appui dans le corps de valve et sollicitant l'organe d'entrée dans la direction opposée aux sièges de clapet fixe et mobile, et un organe de retenue s'étendant dans le corps de valve et comprenant une première zone coopérant en contact d'engagement avec un épaulement du plongeur et une seconde zone extérieure au corps de valve destinée à coopérer en butée avec un élément stationnaire solidaire du boîtier afin de déterminer, en configuration de repos du servomoteur, la position de repos du plongeur.

Un tel servomoteur est décrit par exemple dans le brevet britannique GB-A-1 515 690, où l'organe de retenue est constitué par un prolongement intérieur du disque en tôle formant partie de la structure de piston, ou dans la demande de brevet français FR-A-2 480 692, où l'organe de retenue est constitué par une clé portée par la structure de piston ou le plongeur. Dans ce dernier cas, l'organe de retenue ou clé est conçu de façon à pouvoir se déplacer en translation suivant l'axe général du servomoteur par rapport au corps de valve dans un agencement ne permettant toutefois pas de garantir un déplacement sûr et précis de l'organe de retenue par rapport au corps de valve ni d'éviter des risques d'interférence avec le mouvement relatif du plongeur ou de mise en travers de l'organe de retenue par rapport au plongeur et/ou au corps de valve.

La présente invention a pour objet de proposer un nouvel agencement de servomoteur du type défini plus haut, comportant un organe de retenue associé au corps de valve de façon à garantir un déplacement sûr et précis de cet organe de retenue par rapport au corps de valve, assurant ainsi au plongeur des positionnements également précis et insensibles aux conditions d'utilisation du servomoteur, permettant de respecter en permanence une levée optimale du moyen de clapet en phase de relâchement du freinage et une course morte d'actionnement réduite et de précision accrue grâce à la réduction autorisée des chaînes de côtes de fabrication.

Pour ce faire, selon une caractéristique de l'invention, l'organe de retenue est monté dans le corps de valve à pivotement autour d'un axe perpendiculaire à la direction de coulissement du plongeur et comporte une troisième zone destinée, lors du basculement de l'organe de retenue autour dudit axe, à coopérer en butée avec une surface correspondante du corps de valve afin de déterminer pour un plongeur une position de retrait maximum par rapport au corps de valve sous l'effet du ressort de rappel.

Selon une caractéristique plus particulière de l'invention, l'organe de retenue est constitué par une plaque conformée pour présenter une partie centrale en forme de U s'étendant dans un évidement radial du corps de valve et coopérant par son extrémité libre, formant ladite première zone, avec une gorge périphérique du plongeur formant ledit épaulement, et une partie extérieure en forme de U dont les bras s'étendent de part et d'autre du corps de valve, à l'extérieur de celui-ci, au-delà de l'extrémité libre de la partie centrale, les extrémités libres de la partie extérieure tourillonnant sur un moyen d'axe monté dans le corps de valve.

Selon une autre caractéristique particulière de l'invention, le corps de valve coulisse de façon étanche dans une cheminée centrale du boîtier et il est prévu un organe annulaire monté dans cette cheminée de façon à former butée pour une patte rabattue à partir de l'extrémité de la plaque opposée aux extrémités libres de la partie extérieure en forme de U et constituant ladite seconde zone de l'organe de retenue.

D'autres caractéristiques et avantages de la présente invention ressortiront de la description suivante d'un mode de réalisation, donné à titre illustratif mais nullement limitatif, faite en relation avec les dessins annexés, sur lesquels:

la fig. 1 est une vue partielle en coupe longitudinale d'un servomoteur d'assistance selon l'invention;

la fig. 2 est une vue en coupe transversale suivant la ligne de coupe II-II de la fig. 1;

la fig. 3 représente schématiquement la disposition des éléments constitutifs du moyen de valve lors d'une phase d'actionnement pour créer une pression de freinage;

la fig. 4 est une vue analogue à celle de la fig. 3 montrant l'agencement de ces éléments lors du début d'une phase de retour correspondant à un relâchement de la pression de freinage; et

la fig. 5 est une vue en coupe longitudinale partielle analogue à celle de la fig. 1 montrant la déformation élastique de l'organe de retenue lors d'un essai d'arrachement.

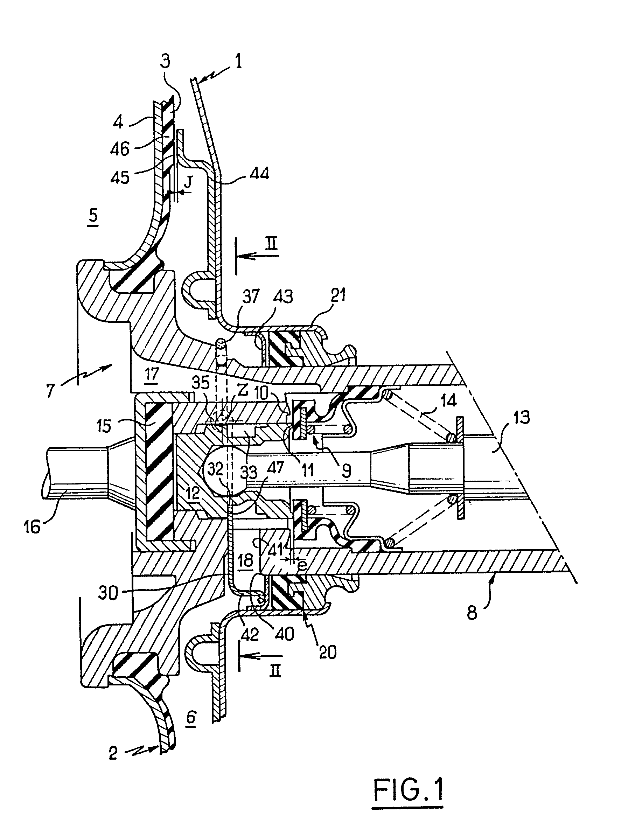

Le servomoteur d'assistance au freinage selon l'invention, du type général décrit dans les documents mentionnés plus haut, comprend un boîtier 1 (dont on ne voit que la portion centrale de la coquille arrière sur les figures) divisé intérieurement par une structure de piston 2, constituée classiquement d'une membrane en élastomère 3 et d'un disque support métallique 4, en deux chambres, typiquement une chambre avant 5 destinée à être reliée en permanence à une source de vide, et une chambre arrière ou chambre de travail 6 destinée à être reliée sélectivement à la chambre avant 5 ou à l'atmosphère par un moyen de valve de distribution comme on le verra plus avant. La structure de piston 2 est fixée centralement sur un moyeu 7, réalisé typiquement en matériau plastique, se prolongeant vers l'arrière et vers l'extérieur par un corps de valve tubulaire 8. Dans ce corps de valve 8 est monté un moyen de clapet sollicité élastiquement, désigné généralement par la référence 9, destiné à coopérer avec un siège fixe de clapet 10 formé centralement dans le corps de valve et avec un siège mobile de clapet 11 formé à l'extrémité arrière d'un plongeur 12 coulissant dans un logement central du corps de valve et solidarisé à une tige d'entrée et d'actionnement 13 destinée à être reliée à une pédale de frein d'un véhicule automobile. De façon également classique, la tige 13 (et partant le plongeur 12) est sollicitée vers l'arrière par un ressort de rappel 14 prenant appui sur un épaulement de la tige 13 et sur un épaulement à l'intérieur du corps de valve 8, en l'ocurrence formé par le fourreau de montage du moyen de clapet 9. Par son extrémité opposée à la tige 13, le plongeur 12 coopère en poussée avec un disque de réaction en matériau élastomère 15 intercalé entre le plongeur 12 et la tige de sortie 16 du servomoteur destinée à actionner le piston d'un maître-cylindre. Dans la position de repos représentée sur la fig. 1, le moyen de clapet 9 est en appui contre le siège de clapet mobile 11 et écarté par ce dernier du siège fixe de clapet 10 d'une distance e, autorisant ainsi la communication entre les chambres 5 et 6 par un passage longitudinal 17 et un évidement radial 18 formés dans l'ensemble moyeu 7/corps de valve 8. En fonctionnement, lorsque la tige 13 est enfoncée vers la gauche, le moyen du clapet 9 vient en appui contre le siège fixe de clapet 10 tout en demeurant en appui contre le siège mobile de clapet 11, interrompant ainsi la communication entre les deux chambres 5 et 6, un complément de déplacement de la tige 13 dans la même direction écartant le siège mobile de clapet 11 du moyen de clapet 9 (maintenu en appui contre le siège fixe de clapet 10) pour admettre de façon mesurée dans la chambre arrière 6 de l'air atmosphérique provenant de l'extérieur par le passage interne formé dans le corps de valve tubulaire 8. Une caractéristique importante de ce type de servomoteur réside dans la course morte d'actionnement figurée par le jeu e existant, au repos, entre le moyen de clapet 9 et le siège fixe de clapet 10. On comprendra que, le moyen de clapet 9 étant sollicité élastiquement en direction des sièges mobile 11 et fixe 10, ce jeu e est déterminé par la position au repos du plongeur 12 par rapport au corps de valve 8 qui, lui-même, ainsi que la structure de piston 2, doit être positionné par rapport au boîtier 1 monté sur une structure fixe du véhicule. Comme on le notera sur les figures 1 et 5 le corps de valve tubulaire 8 s'étend à coulissement étanche au travers d'un ensemble de guidage et d'étanchéité 20 monté dans un prolongement tubulaire arrière ou cheminée 21 du boîtier.

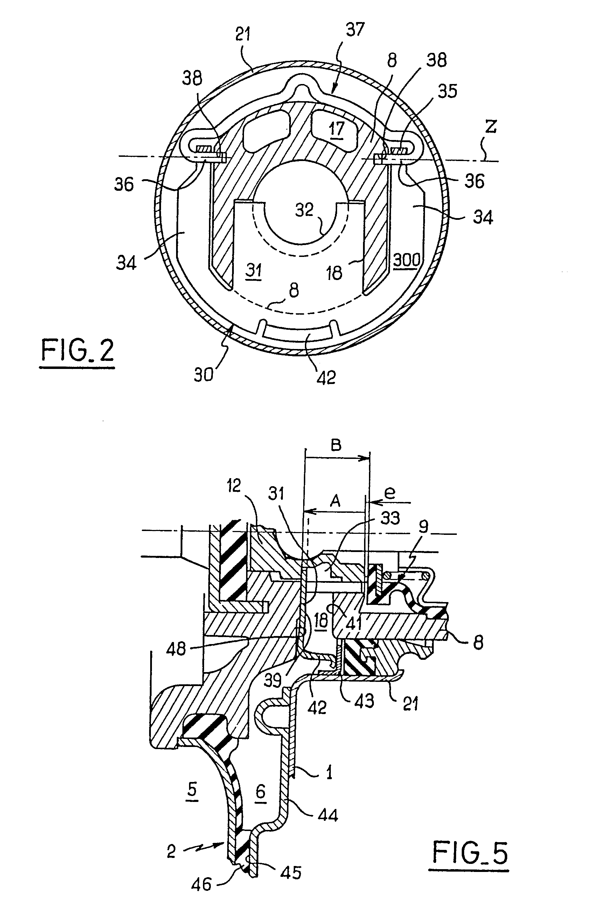

Conformément à l'invention, le positionnement du plongeur 12 est assuré par un organe de retenue 30 réalisé à partir d'une plaque en tôle mince, d'épaisseur inférieure à 1,5 mm, et conformé pour présenter, comme on le voit mieux sur la fig. 2, une partie centrale en forme de U 31 définissant, à son extrémité libre, une découpe centrale semi-circulaire 32 de diamètre légèrement supérieure à celui du fond d'une gorge périphérique 33 du plongeur 12 dans laquelle cette extrémité libre de la partie centrale 31 est reçue en s'étendant radialement dans l'évidement 18 du corps de valve 8, dont la largeur est dimensionnée en conséquence. La plaque 30 comporte en outre une partie extérieure également en forme de U 300, co-planaire à la précédente et formée par deux bras 34 s'étendant à partir de la zone centrale de la première partie 31 opposée à la découpe 32 pour se prolonger au-delà de l'extrémité libre de la partie centrale 31 définissant la découpe 32, les extrémités des bras 34 étant ourlées, comme figuré en 35, pour tourilloner sur deux tronçons d'extrémité alignés dirigés l'un vers l'autre 36 d'une épingle en fil métallique 37 présentant la configuration générale d'un C, les tronçons d'extrémité 36 étant engagés dans des trous borgnes 38 formés dans les parois latérales opposées du corps de valve 8, le corps de l'épingle 37 prenant appui élastique sur la périphérie du corps de valve 8 en demeurant inscrit dans le cercle de la cheminée 21 du boîtier 1.

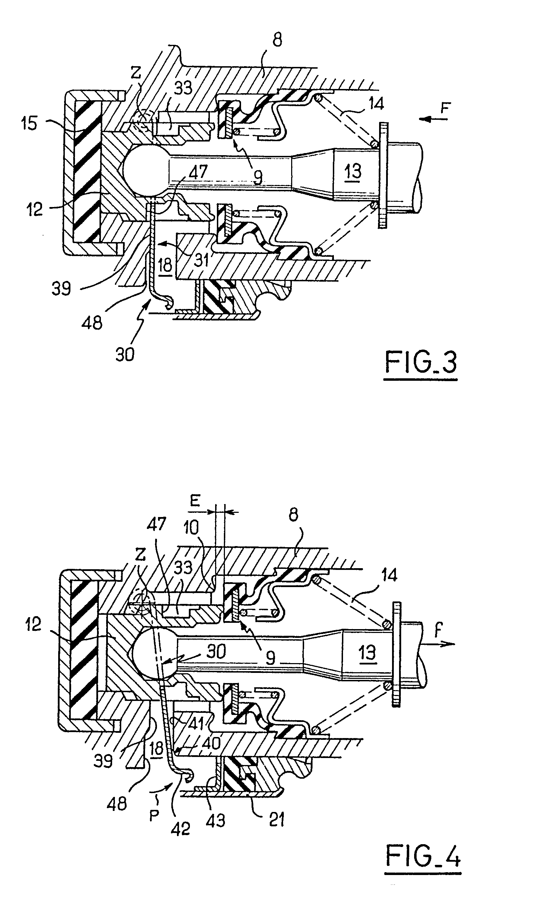

L'évidement 18 est dimensionné transversalement pour recevoir librement la partie centrale 31 de la plaque 30 et axialement pour autoriser un basculement d'un angle supérieur à 7° de la plaque autour de l'axe Z des tronçons d'axe 36 entre une position de repos, représentée sur la fig. 1, où la partie centrale 31 de la plaque 30 porte à plat contre la paroi avant 39 de l'évidement 18, et une position complètement basculée, représentée sur la fig. 4, où la zone centrale de la partie centrale 31 vient porter contre l'extrémité radialement extérieure 40 de la paroi arrière 41 de l'évidement 18. Comme on le voit sur les figures, l'extrémité extérieure, opposée à la découpe 32, de la partie centrale 31 de la plaque 30 comporte une patte rabattue vers l'arrière 42, s'étendant sensiblement perpendiculairement au plan général de la plaque 30 et présentant avantageusement une extrémité ourlée destinée à venir porter en butée contre une collerette métallique 43 montée dans la cheminée 21 en avant de l'ensemble de guidage et d'étanchéité 20. Le boîtier 1 comporte avantageusement un renfort annulaire 44 rigidifiant la paroi arrière du boîtier 1 vis à vis de vis de fixation. Ce renfort 44, entourant le corps de valve 8, présente des parties externes rabattues vers l'intérieur susceptibles de former surfaces de butée 45 pour des bourrelets 46 de la membrane 3 de la structure de piston 2.

Avec l'agencement qui vient d'être décrit, dans la configuration de repos du servomoteur représentée sur la fig. 1, la partie centrale 31 de la plaque 30 porte en appui à plat contre la paroi avant 39 de l'évidement 18 et, par l'extrémité de la patte 42, contre la collerette 43, la plaque 30 définissant ainsi un plan de référence et de positionnement pour le plongeur 12 dont l'épaulement avant 47 de la gorge 33 porte en appui contre la partie centrale 31 sous l'effet du ressort de rappel 14. Le corps de valve 8 et la structure de piston 2 sont également positionnés vis à vis de ce plan de référence déterminé par la position de la collerette 43 pour assurer un jeu minimal et constant e entre le moyen de clapet 9 et le siège fixe de clapet 10, ainsi qu'un jeu faible J entre les bourrelets 46 de la membrane 3 et les faces d'appui adjacentes 45 du renfort 44.

Lorsque, pour exercer une pression de freinage, la tige 13 est enfoncée dans la direction de la flèche F sur la fig. 3, le plongeur 12 se déplace vers l'avant en écrasant le disque 15, l'épaulement avant 47 de la gorge 33 s'écartant de la partie centrale 31 de la plaque 30 maintenue plaquée contre la paroi avant 39 de l'évidement 18. Lorsque, à partir de cette position, la force exercée sur la tige 13 est relâchée, cette dernière, sous l'effet du ressort de rappel 14, se déplace vers l'arrière dans le sens de la flèche f sur la fig. 4 en provoquant ainsi un déplacement relatif vers l'arrière du plongeur 12 par rapport au corps de valve 8. Ce faisant, l'épaulement 47 de la gorge 33 revient porter contre la partie centrale 31 de la plaque 30 et provoque le basculement de cette dernière dans le sens de la flèche P jusqu'à ce que l'extrémité extérieure de la partie centrale 31 vienne porter contre l'extrémité 40 de la paroi arrière 41 de l'évidement 18, comme susmentionné, definissant ainsi une surouverture $\underline{E}$ du moyen de clapet 9 par rapport au siège fixe de clapet 10 favorisant une dépréssurisation rapide de la chambre de travail arrière 6 du servomoteur pour permettre à celui-ci de recouvrer rapidement une position d'équilibre. Si la force exercée sur la tige 13 est totalement relâchée, l'ensemble structure de piston 2/moyen 7/corps de valve 8/plongeur 12/tige 13 est ramené vers la position de repos du servomoteur, c'est à dire que, à partir de la configuration de la fig. 4 conservée jusqu'alors, l'extrémité de la patte 42 vient porter contre la collerette 43 pour repositionner mutuellement le plongeur et le corps de valve 8 ainsi que ce dernier (avec la structure de piston 2) par rapport au boîtier 1.

Dans certaines conditions, imposés par des règlements nationaux, notamment lors d'essais dits d'arrachement, le servomoteur peut être sollicité en traction de façon que la membrane 3 vienne porter, par l'intermédiaire de ses bourrelets 46, contre les faces d'appui 45 du renfort 44. Pour éviter dans ce cas une détérioration de l'organe de retenue 30 et une perte des références évoquées ci-dessus, on prévoiera avantageusement un léger décrouchement vers l'avant 48 de l'extrémité radialement vers l'extérieur de la paroi avant 39 de l'évidement 18. Ainsi, comme représenté sur la fig. 5, lorsque le bourrelet 46 est amené à être plaqué contre la surface d'appui 45 du renfort 44, la partie centrale 31 de la plaque 30, avec sa patte 42 en appui contre la collerette 43, peut fléchir élastiquement dans le décrochement 48 sans entraîner de déformations permanentes ultérieures de la patte 42 ou de cette partie centrale 31 de la plaque 30. Comme repéré sur cette même fig. 5, la précision obtenue sur la course morte d'ouverture $\underline{e}$ est grande car la chaîne de côtes est réduite au minimum aux distances caractéristiques A et B, respectivement entre le plan du siège fixe de clapet et le plan de la zone radialement intérieure de la face avant 39 de l'ouverture 18 (et donc de la face avant de la partie centrale 31 de la plaque 30) et entre ce dernier plan et le plan du siège mobile de clapet. On notera d'autre part que la position de montage requise pour la collerette 43 peut être déterminée, et éventuellement modulée légèrement, avec une grande précision.

**Revendications**

1. Servomoteur d'assistance au freinage comprenant:
un boîtier (1);
une structure de piston (2) divisant intérieurement le boîtier (1) en deux chambres (5, 6);
un moyen de valve de distribution (9, 10, 11) disposé dans un corps de valve (8) solidaire centralement de la structure de piston (2) et actionné par un organe d'entrée (13) pour créer sélectivement une différentielle de pression entre les chambres;
le moyen de valve comportant:
un plongeur (12) monté à coulissement dans le corps de valve (8), relié à l'organe d'entrée (13) et définissant à une de ses extrémités un siège mobile de clapet (11);
un siège fixe de clapet (10) formé par le corps de valve, concentriquement au siège mobile de clapet;
un moyen de clapet (9) monté dans le corps de valve (8) et sollicité élastiquement vers les sièges de clapet fixe et mobile;
un ressort de rappel (14) prenant dans le corps de valve et sollicitant l'organe d'entrée (13) dans la direction opposée aux siège de clapet fixe et mobile, et
un organe de retenue (30) s'étendant dans le corps de valve (18) et comprenant une première zone (32) coopérant en contact d'engagement avec un épaulement (47) du plongeur (12) et une seconde zone (42) extérieure au corps de valve destinée à coopérer en butée avec un élément stationnaire solidaire du boîtier afin de déterminer, en configuration de repos du servomoteur, la position de repos du plongeur, caractérisé en ce que l'organe de retenue (30) est monté dans le corps de valve (8) à pivotement autour d'un axe (Z) perpendiculaire à la direction de coulissement du plongeur et comporte une troisième zone (31) destinée, lors du basculement (P) de l'organe de retenue autour dudit axe, à coopérer en butée avec une surface correspondante (40) du corps de valve (8) afin de déterminer pour ce plongeur une position de retrait maximum par rapport au corps de valve sous l'effet du ressort de rappel (14).

2. Servomoteur selon la revendication 1, caractérisé en ce que l'organe de retenue est constitué par une plaque (30) conformée pour présenter une partie centrale en forme de U (31) s'étendant dans un évidement radial (18) du corps de valve (8) et coopérant par son extrémité libre (32), formant ladite première zone, avec une gorge périphérique (33) du plongeur (12) formant ledit épaulement, et une partie extérieure en forme de U (300) dont les bras (34) s'étendent de part et d'autre du corps de valve (8), à l'extérieur de celui-ci, au-delà de l'extrémité libre (32) de la partie centrale (31), les extrémités libres (35) de la partie extérieure (33) tourillonnant sur un moyen d'axe (36) monté dans le corps de valve (8).

3. Servomoteur selon la revendication 2, caractérisé en ce que l'extrémité de la plaque (30) opposée à l'extrémité libre (32) de la partie inférieure (31) présente une patte (42) rabattue sensiblement perpendiculairement au plan général de la plaque (30) dans la direction du moyen de clapet (9) et constituant ladite seconde zone.

4. Servomoteur selon la revendication 3, dans lequel le corps de valve (8) coulisse de façon étanche dans une cheminée centrale (21) du boîtier (1), caractérisé en ce qu'il comporte un organe annulaire (43) monté dans la cheminé (21) et formant butée pour la patte (42) de la plaque (30).

5. Servomoteur selon la revendication 4, caractérisé en ce que la troisième zone est constituée par la zone de la partie centrale (31) de la plaque (30) adjacente à l'embase de la patte (42), la surface correspondante de butée du corps de valve (8) étant formée par l'extrémité extérieure (40) de la paroi (41) de l'évidement radial (18) voisine du moyen de clapet (9).

6. Servomoteur selon l'une des revendications 2 à 5, caractérisé en ce que le moyen d'axe est constitué par deux tronçons d'extrémité (36) dirigés l'un vers l'autre d'une épingle (37) engagés dans des trous alignés (38) formés dans la paroi externe du corps de valve (8).

7. Servomoteur selon la revendication 5 ou la revendication 6, caractérisé en ce que la paroi (39) de l'évidement radial (18) éloignée axialement du moyen de clapet (9) comporte une face intérieure d'appui pour la partie centrale (31) de la plaque (30) et une partie en décrochement extérieure (48).

8. Servomoteur selon l'une des revendications précédentes, caractérisé en ce que le boîtier (1) comporte un renfort annulaire intérieur (44) entourant le corps de valve (8) et formant surfaces de butée (45) pour la structure de piston (2; 3-46).

**Patentansprüche**

1. Bremshilfe-Servomotor mit:
einem Gehäuse (1);
einer Kolbenanordnung (2), die das Gehäuse (1) im Inneren in zwei Kammern (5, 6) unterteilt;
eine Verteilerventileinrichtung (9, 10, 11), die in einem an der Kolbenanordnung (2) zentral befestigten Ventilgehäuse (8) angeordnet ist und von einem Eingangsglied (13) betätigt wird, um wahlweise eine Druckdifferenz zwischen den Kammern zu erzeugen;
wobei die Ventileinrichtung aufweist:
einen Plunger (12), der im Ventilgehäuse (8) gleitend gelagert ist, mit dem Eingangsglied (13) verbunden ist und an einem seiner Enden einen beweglichen Ventilsitz (11) bildet;
einen ortsfesten Ventilsitz (10), der konzentrisch zu dem beweglichen Ventilsitz von dem Ventilgehäuse gebildet wird;
einen Ventilkörper (9), der in dem Ventilgehäuse (8) angebracht ist und gegen den ortsfesten sowie beweglichen Ventilsitz elastisch vorgespannt ist;
eine Rückholfeder (14), die am Ventilgehäuse abgestützt ist und das Eingangsglied (13) in der dem ortsfesten und beweglichen Ventilsitz entgegengesetzten Richtung vorspannt, und ein Halteteil (30), das sich in dem Ventilgehäuse (18) erstreckt und einen ersten Bereich (32) sowie einen zweiten Bereich (42) aufweist, von denen der erste Bereich mit einer Schulter (47) des Plungers (12) berührungsmässig zusammenwirkt und der zweite Bereich, der ausserhalb des Ventilgehäuses liegt, dazu dient, mit einem am Gehäuse festgelegten stationären Element anlagemässig zusammenzuwirken, um im Ruhzustand des Servomotors die Ruhestellung des Plungers festzulegen,
dadurch gekennzeichnet, dass das Halteteil (30) in dem Ventilgehäuse (8) schwenkbar gelagert ist um eine Achse (Z), die senkrecht zur Gleitrichtung des Plungers verläuft und einen dritten Bereich (31) aufweist, der bei einer Kippbewegung (P) des Halteteils um die besagte Achse dazu dient, mit einer entsprechenden Fläche (40) des Ventilgehäuses (8) anschlagmässig zusammenzuwirken, um für den Plunger eine maximale Rückziehstellung bezüglich des Ventilgehäuses unter der Wirkung der Rückholfeder (14) festzulegen.

2. Servomotor nach Anspruch 1, dadurch gekennzeichnet, dass das Halteteil von einer Platte (30) gebildet wird, die so geformt ist, dass sie einen zentralen U-förmigen Abschnitt (31) und einen äusseren U-förmigen Abschnitt (300) aufweist, von denen der zentrale U-förmige Abschnitt sich in eine radiale Ausnehmung (18) des Ventilgehäuses (8) erstreckt und an seinem freien Ende (32), das den besagten ersten Bereich bildet, mit einer die besagte Schulter bildenden Umfangsnut (33) des Plungers (12) zusammenwirkt und der äussere U-förmige Abschnitt mit seinen Schenkeln (34) sich beidseitig zu dem Ventilgehäuse (8) ausserhalb desselben über das freie Ende (32) des zentralen Abschnitts (31) hinauserstreckt, wobei die freien Enden (35) des äusseren Abschnittes (33) auf einem Achsteil (36), der im Ventilgehäuse (8) angebracht ist, drehbar gelagert sind.

3. Servomotor nach Anspruch 2, dadurch gekennzeichnet, dass das Ende der Platte (30), das dem freien Ende (32) des unteren Abschnittes (31) entgegengerichtet ist, eine Lasce2 (42) aufweist, die im wesentlichen rechtwinklig zur allgemeinen Ebene der Platte (30) in der Richtung des Ventilkörpers (9) umgebogen ist und den besagten zweiten Bereich bildet.

4. Servomotor nach Anspruch 3, bei dem das Ventilgehäuse (8) abgedichtet in einem zentralen Schacht (21) des Gehäuses (1) gleitet, dadurch gekennzeichnet, dass er ein Ringteil (43) aufweist, das in dem Schacht (21) angebracht ist und einen Anschlag für die Lasche (42) der Platte (30) bildet.

5. Servomotor nach Anspruch 4, dadurch gekennzeichnet, dass der dritte Bereich von der am Boden der Lasche (42) angrenzenden Bereich des zentralen Abschnitts (31) der Platte (30) gebildet wird, wobei die entpsrechende Anschlagfläche des Ventilgehäuses (8) von dem äusseren Ende (40) der Wand (41) der radialen Ausnehmung (18) benachbart zum Ventilkörper (9) gebildet wird.

6. Servomotor nach einem der Ansprüche 2-5, dadurch gekennzeichnet, dass das Achsteil von zwei gegeneinandergerichteten Endabschnitten (36) einer Nadel (37) gebildet wird, die in zueinander ausgerichtete Löcher (38) in der Aussenwand des Ventilgehäuse (8) greifen.

7. Servomotor nach Anspruch 5 oder 6, dadurch gekennzeichnet, dass die Wand (39) der radialen Ausnehmung (18), die axial zum Ventilkörper (9) verlängert ist, eine innere Anschlagfläche für den zentralen Abschnitt (31) der Platte (30) sowie einen äusseren zurückversetzen Abschnitt (48) aufweist.

8. Servomotor nach einem der vorhergehenden Ansprüche, dadurch gekennzeichnet, dass das Gehäuse (1) eine ringförmige innere Verstärkung (44) aufweist, die das Ventilgehäuse (8) umgibt und Anschlagflächen (45) für die Kolbenanordnung (2; 3-46) bildet.

**Claims**

1. A brake servo motor comprising:
a casing (1);
a piston structure (2) dividing the casing (1) internally into two chambers (5, 6);
a distribution valve means (9, 10, 11) disposed in a valve body (8) centrally fixed to the piston structure (2) and actuated by an input member (13) to create selectively a pressure differential between the chambers;
the valve means comprising:
a plunger (12) slidingly mounted in the valve body (8), connected to the input member (13), and defining a movable valve seat (11) at one of its ends;
a fixed valve seat (10) formed by the valve body concentrically to the movable valve seat;
a valve member (9) mounted in the valve body (8) and resiliently biased towards the fixed and movable valve seats;
a return spring (14) supported in the valve body and biasing the input member (13) in a direction opposite to the fixed and movable valve seats, and
a holding member (30) extending within the valve body (18) and comprising a first zone (32) cooperating in abutting relationship with a shoulder (47) of the plunger (12), and a second zone (42) externally of the valve body adapted to cooperate in abutting relationship with a stationary element fixed to the casing in order to determine, when the servo motor is in its rest condition, the rest position of the plunger, characterized in that the holding member (30) is mounted in the valve body (8) for pivotal movement about an axis (Z) perpendicular to the direction of sliding movement of the plunger, and comprises a third zone (31) intended to cooperate in abutting relationship with a corresponding surface (40) of the valve body (8) during pivotal movement (P) of the holding member about said axis in order to determine for said plunger a maximum return position with respect to the valve body under the action of the return spring (14).

2. Servo motor according to claim 1, characterized in that the holding member is comprised of a plate (30) shaped to present a central U-shaped portion (31) extending within a radial cavity (18) of the valve body (8) and cooperating at its free end (32) forming said first zone with a peripheral groove (33) of the plunger (12) forming said shoulder, and an external U-shaped portion (300) having arms (34) extending on either side of the valve body (8) at the exterior thereof beyond the free end (32) of the central portion (31), the free ends (35) of the external portion (33) rotating about an axis means (36) mounted in the valve body (8).

3. Servo motor according to claim 2, characterized in that the end of the plate (30) opposite to the free end (32) of the lower portion (31) presents a paw (42) rebent substantially perpendicularly to the general plane of the plate (30) in the direction of the valve member (9) and forming said second zone.

4. Servo motor according to claim 3, wherein the valve body (8) slides in a fluid-tight manner within a central channel (21) of the casing (1), characterized in that it comprises an annular member (43) mounted in the channel (21) and forming an abutment for the paw (42) of the plate (30).

5. Servo motor according to claim 4, characterized in that the third zone is comprised of the zone of the central position (31) of the plate (30) adjacent the bottom of the paw (42), the corresponding abutment surface of the valve body (8) being formed by the external end (40) of the wall (41) of the radial cavity (18) adjacent the valve member (9).

6. Servo motor according to any of claims 2 to 5, characterized in that the axis means is comprised by two end portions (36) of a wire (37), directed towards each other and engaging aligned apertures (38) formed in the external wall of the valve body (8).

7. Servo motor according to claim 5 or claim 6, characterized in that the wall (39) of the radial cavity (18) which is elongated axially to the valve member (9), comprises an internal face for abutment by the central portion (31) of the plate (30), and an outer reset portion (48).

8. Servo motor according to any of the preceding claims, characterized in that the casing (1) comprises an annular internal reinforcement (44) enclosing the valve body (8) and forming abutment surfaces (45) for the piston structure (2; 3-46).

0 153 238

FIG.1

FIG_2

FIG_5

FIG_3

FIG_4